# EUROPÄISCHE PATENTANMELDUNG

(11) **EP 2 145 980 A1**
(43) Veröffentlichungstag der Anmeldung: **20.01.2010**
(21) Anmeldenummer: 09008884.0
(22) Anmeldetag: 07.07.2009
(51) Int. Cl.: C23C 22/24, C23C 18/12, C23C 22/83, C23C 28/04

(54) **Farbige Edelstahloberfläche und Verfahren zum Färben von Edelstahl**

(30) Priorität: 07.07.2008 DE 102008031948
(71) Anmelder: POLIGRAT GMBH, 81829 München (DE)
(72) Erfinder: Pießlinger-Schweiger, Siegfried, 85591 Vaterstetten (DE)
(74) Vertreter: Wibbelmann, Jobst

(57) **Zusammenfassung**

Die vorliegende Erfindung betrifft farbige Edelstahloberflächen, die einen dünnen porösen Oxidüberzug, der durch Behandlung der Edelstahloberfläche mit einer Schwefelsäure und Chromsäure enthaltenden Lösung erhalten wurde, und eine Sol-Gel-Lackschicht, die thermisch gehärtet wurde, umfassen, sowie Gegenstände mit einer solchen farbigen Edelstahloberfläche. In einem weiteren Aspekt betrifft die Erfindung ein Verfahren zur Herstellung einer farbigen Edelstahloberfläche, das ein Behandeln der Edelstahloberfläche mit einer Schwefelsäure und Chromsäure enthaltenden Lösung, um die Edelstahloberfläche durch Erzeugung eines porösen Oxid-überzugs zu färben, ein Auftragen eines Sol-Gel-Lacks auf diese Edelstahloberfläche, und ein thermisches Härten des Gels umfasst. Darüber hinaus betrifft die Erfindung die Verwendung eines Sol-Gel-Lacks zum Härten und/oder Glätten einer Edelstahloberfläche, die durch Behandlung mit einer Schwefelsäure und Chromsäure enthaltenden Lösung einen porösen Oxidüberzug erhält, in den der Sol-Gel-Lack eindringen kann und so mit diesem porösen Oxidüberzug eine feste Verbundschicht bilden kann.

## Beschreibung

Die vorliegende Erfindung betrifft farbige Edelstahloberflächen hoher Beständigkeit mit einem breiten Verwendungsspektrum, Gegenstände, die derartige Edelstahloberflächen aufweisen, sowie ein Verfahren zum Herstellen solcher Edelstahloberflächen. Die erfindungsgemäße farbige Edelstahloberfläche weist einen dünnen porösen Oxidüberzug, der durch Behandlung mit einer Schwefelsäure und Chromsäure enthaltenden Lösung erhalten wird, und eine Sol-Gel-Lackschicht, die thermisch gehärtet wird, auf. Das erfindungsgemäße Verfahren umfasst eine Behandlung der Edelstahloberfläche mit einer Schwefelsäure und Chromsäure enthaltenden Lösung, ein Auftragen eines Sol-Gel-Lacks auf die gefärbte Oberfläche, und ein Härten des so erhaltenen Lacks.

### Stand der Technik

Es ist bekannt, dass Oberflächen von Nichtrostenden Stählen durch eine Behandlung mit wässrigen Lösungen, die Chromsäure und Schwefelsäure in bestimmten Konzentrationen enthalten, in einer Reihe attraktiver Farben gefärbt werden können. Dabei sind die Art und Anzahl der erzielbaren Farben abhängig vom Oberflächenzustand, vom Gefüge und vom Gehalt anderer Metalle, insbesondere dem Chromgehalt, dieser Legierungen, die als Nichtrostende Stähle oder Edelstähle bezeichnet werden.

Bei der Behandlung mit der Lösung aus Chromsäure und Schwefelsäure, die in der Regel in einem Tauchbad durchgeführt wird, entsteht auf der Oberfläche des Edelstahls eine transparente Schicht, die im Wesentlichen aus Chromoxiden gebildet wird. Mit Zunahme der Tauchzeit nimmt die Dicke dieser Schicht bis zu einem Grenzwert von etwa 0,8 µm zu. Abhängig von der Dicke dieser Chromoxidschicht entsteht dabei auf der Oberfläche durch Lichtinterferenz eine Reihe von Farben, die im Wesentlichen den Spektralfarben entsprechen.

All diese Farben entstehen mit wachsender Dicke der Oxidschicht der Reihe nach während dieses Behandlungsprozesses in der Chromsäure- und Schwefelsäurelösung. So können beispielsweise unter anderem die Farben blau, gold, rot und grün erhalten werden. Daher ist es zur Herstellung definierter Farben erforderlich, das Wachstum der Schichten während dieses Behandlungsprozesses zu ermitteln, um bei Erreichen der Schichtdicke, die der gewünschten Farbe entspricht, den Prozess zu beenden. In der Patentanmeldung DE 2 230 157 ist ein geeignetes Verfahren beschrieben, das auf der Messung der elektrischen Potentialdifferenz zwischen der zu färbenden Edelstahloberfläche und einer Referenzelektrode beruht. Dieses Verfahren wird heute allgemein zur Steuerung des Färbeprozesses verwendet.

T. E. Evans, et al. haben die Struktur und Eigenschaften dieser sich beim Färbeprozess ausbildenden Schichten eingehend beschrieben (Transactions of the Institute of Metal Finishing, 50 (1972), S. 77-79 und Band 51 (1973), S. 108-112). Hiernach handelt es sich dabei um Schichten aus hydratisierten Spinelloxiden der Metalle Chrom, Eisen und - falls dieses ebenfalls Bestandteil der Legierung ist - Nickel. Diese Spinelloxid-Schichten enthalten außerdem mindestens 50% Wasser in gebundener Form.

Die Schichten, die bei diesem Prozess erhalten werden, sind weich und porös. Der Anteil der Poren am Volumen der Schichten beträgt etwa 20-30%. Daher können die Schichten mechanisch leicht beschädigt und abgerieben werden, weshalb sie ohne weitere Behandlung für einen praktischen Gebrauch kaum geeignet sind.

In der Patentanmeldung DE 2 126 129 wird ein Verfahren zum Härten der beim Färben von Edelstahl erhaltenen Schichten beschrieben. Dabei werden die Oberflächen unmittelbar nach dem Färben einer elektrolytischen Behandlung in einem Tauchprozess unterzogen. Dazu wird die gefärbte Oberfläche in eine wässrige Elektrolytlösung getaucht und als Kathode geschaltet. Während dieser Behandlung wird in den Poren der farbigen Oxidschicht Chromoxid abgeschieden. Die so behandelten Schichten weisen gegenüber nicht behandelten Schichten eine deutlich höhere Härte auf.

Die Steuerung des Färbeprozesses durch Potentialmessung und das Härten der Schichten durch kathodische Behandlung entsprechen dem gegenwärtigen Stand der Technik. Die dabei erzielten Schichten weisen aber trotz der kathodischen Härtung eine relativ geringe Widerstandsfähigkeit gegen mechanischen Verschleiß auf und können deshalb nur in Bereichen eingesetzt werden, in denen sie keiner wesentlichen mechanischen Beanspruchung ausgesetzt sind.

Eine weitere Einschränkung des Gebrauchswertes ergibt sich daraus, dass die gefärbten Edelstahloberflächen auch nach dem Härten der Schichten nicht vollständig porenfrei sind. Dadurch haften Verschmutzungen wie etwa Handschweiß oder Fingerabdrücke oft hartnäckig an der Oberfläche und können zu deutlichen Farbveränderungen an den verschmutzten Stellen führen. Diese werden dadurch hervorgerufen, dass die Schmutzschicht die optische Dicke der Farbschicht und damit die Interferenzfärbung verändert.

Außerdem widerstehen die nach dem herkömmlichen Verfahren gefärbten und gehärteten Edelstahloberflächen je nach Legierung maximal einer Temperaturbelastung von 150 - 180°C. Bei höheren Temperaturen verändert sich die Farbwirkung durch thermische Oxidation des Edelstahls dauerhaft in Richtung höherer Schichtdicken, bis letztlich die Farbwirkung verschwindet. Auch bei dauerhaft erhöhten Temperaturen unterhalb dieser zuvor genannten Werte kann durch allmähliches Dehydratisieren der Farbschicht eine dauerhafte Veränderung in Richtung derjenigen Farben eintreten, die geringeren Oxidschichtdicken entsprechen.

In der Summe führen die Nachteile der geringen Abriebfestigkeit, des schlechten Reinigungsverhaltens und der begrenzten Temperaturbeständigkeit von gefärbtem Edelstahl zu erheblichen Einschränkungen bei der Anwendung solcher gefärbten Edelstähle.

### Gegenstand der Erfindung

Gegenstand der vorliegenden Erfindung ist daher eine farbige Edelstahloberfläche, die diese Nachteile der bisherigen farbigen Edelstahloberflächen überwindet, sowie ein verbessertes Verfahren zur Herstellung einer solchen farbigen Edelstahloberfläche.

Die erfindungsgemäße farbige Edelstahloberfläche weist einen dünnen porösen Oxidüberzug, der durch Behandlung der Edelstahloberfläche mit einer im Wesentlichen Schwefelsäure und Chromsäure enthaltenden Lösung erhalten wurde, und eine Sol-Gel-Lackschicht, die thermisch gehärtet wurde, auf. Die farbige Edelstahloberfläche kann dadurch erhalten werden, dass auf einen dünnen porösen Oxidüberzug, der durch Behandlung der Stahloberfläche mit einer im Wesentlichen Schwefelsäure und Chromsäure enthaltenden Lösung erhalten wurde, ein Sol-Gel-Lack aufgetragen und thermisch gehärtet wird. Die erfindungsgemäßen Edelstahloberflächen sind weitgehend grifffest und unempfindlich gegenüber Verschmutzungen, leicht zu reinigen und deutlich beständiger gegen mechanischen Verschleiß und erhöhte Temperatur als herkömmliche farbige Edelstahloberflächen.

Unter einem Edelstahl wird in der vorliegenden Erfindung ein Stahl verstanden, dem Chrom zur Erhöhung der Korrosionsbeständigkeit in einer Menge von mindestens 13% zulegiert ist. Unter diesen Bedingungen erhöht sich die Korrosionsbeständigkeit des Stahls so weit, dass er unter gewöhnlichen Umgebungsbedingungen nicht mehr rostet, weshalb ein solcher Stahl häufig auch als sogenannter "Nichtrostender Stahl" bezeichnet wird. Darüber hinaus können die Edelstähle gemäß der vorliegenden Erfindung durch weitere Zusätze von Nickel, Molybdän, Mangan, Stickstoff und weiteren dem Fachmann bekannten Elementen in ihrer Beständigkeit und Verarbeitbarkeit verändert worden sein. Die Edelstahllegierungen der vorliegenden Erfindung enthalten dabei stets mindestens 50% Eisen. Die Edelstähle können dabei jegliche Art von Gefüge aufweisen, beispielsweise ein austenitisches, ein ferritisches oder ein martensitisches Gefüge, bzw. deren Mischformen. Die Edelstahloberflächen können vor der Färbung in Schwefelsäure und Chromsäure enthaltender Lösung mit mechanischen, chemischen oder elektrochemischen Verfahren bearbeitet worden sein.

Die in der Beschreibung der vorliegenden Erfindung verwendeten Prozentangaben und Prozentsätze bzw. deren Verhältnisse beziehen sich auf das Gewicht der jeweiligen Elemente, Substanzen und/oder Lösungen, soweit nichts Gegenteiliges angegeben ist.

In einer bevorzugten Ausführungsform befindet sich dabei zumindest ein Teil des Sol-Gel-Lacks in den Poren des Oxidüberzugs. Durch das Eindringen des Sol-Gel-Lacks in den porösen Oxidüberzug kann sich bei der Reifung und Härtung des Lacks eine feste Verbundschicht zwischen Sol-Gel-Lack und Oxidüberzug ausbilden. Das Vorliegen einer solchen Verbundschicht ist daher ein Merkmal einer bevorzugten Ausführungsform der vorliegenden Erfindung. In einer weiteren bevorzugten Ausführungsform weist der Oxidüberzug einen Porenanteil von 15-35 % (v/v) auf. In einen erheblichen Teil dieses Porenvolumen kann das Sol eindringen und so kann der Sol-Gel-Lack mit dem Oxid die oben erwähnte Verbundschicht bilden.

Der poröse Oxidüberzug sollte bevorzugt eine Schichtdicke von weniger als 1 µm aufweisen. Die gesamte Oberfläche aus dem farbgebenden porösen Oxidüberzug und der Sol-Gel-Lackschicht weist vorzugsweise eine Schichtdicke von bis zu bis etwa 6 µm auf, weiter bevorzugt 0,5 bis 3 µm.

Die vorliegende Erfindung richtet sich auch auf Gegenstände, die mindestens eine Oberfläche oder einen Teil einer Oberfläche aufweisen, die eine farbige Edelstahloberfläche ist, wie sie hier beschrieben ist.

Daneben richtet sich die Erfindung auch auf ein Verfahren zur Herstellung von farbigen Edelstahloberflächen, wie sie hier beschrieben sind. Dieses erfindungsgemäße Verfahren umfasst dabei:
a) eine Behandlung der Edelstahloberfläche mit einer Lösung, welche Schwefelsäure und Chromsäure enthält, um die Edelstahloberfläche durch Erzeugung eines dünnen porösen Oxidüberzugs zu färben;
b) ein Auftragen eines Sol-Gel-Lacks auf diese gefärbte Edelstahloberfläche; und
c) eine thermische Härtung des den Lack bildenden Gels.

Das erfindungsgemäße Verfahren umfasst im ersten Schritt ein Verfahren zur Oxidation der Oberfläche und Erzeugung eines Oxidüberzugs einer bestimmten Dicke, die der gewünschten Farbe entspricht, wie es herkömmlicherweise im Stand der Technik verwendet wird.

Das erfindungsgemäße Verfahren unterscheidet sich jedoch vom Stand der Technik durch die weiteren Schritte (b) und (c). In Gegensatz zu herkömmlichen Härtungsverfahren, insbesondere im Gegensatz zum kathodischen Härten der Farbschicht nach dem Färben, wird die mit einer Schwefelsäure und Chromsäure enthaltenden Lösung behandelte Edelstahloberfläche einer weiteren Behandlung unterzogen, die den farbigen Edelstahloberflächen deutlich bessere Eigenschaften verleiht.

Im ersten Schritt des erfindungsgemäßen Verfahrens werden die zu färbenden Edelstahloberflächen oxidativ behandelt. Die bei dieser oxidativen Behandlung zur Veränderung der Farbe der Oberfläche eingesetzte Lösung enthält vorzugsweise Schwefelsäure, Chromsäure und Wasser. Diese Behandlung kann durch jegliche Form des Inkontaktbringens dieser wässrigen Lösung mit der zu behandelnden Oberfläche erfolgen, beispielsweise durch Eintauchen, Fluten (wenn es sich etwa um innen gelegene Edelstahloberflächen wie beispielsweise bei Rohren, Gefäßen oder Hohlräumen und ähnlichen Gegenständen handelt), Aufsprühen oder Aufstreichen. Üblicherweise erfolgt dieser Schritt durch Eintauchen des zu färbenden Werkstücks in die wässrige Lösung, die in Form eines Tauchbades vorliegt.

Vorzugsweise ist die Schwefelsäure und Chromsäure enthaltenden Lösung eine wässrige Lösung von Schwefelsäure und Chromsäure. Aufgrund der Tendenz der Chromsäure zur Wasserabspaltung, insbesondere in den konzentrierten Lösungen, die verwendet werden, um die in Schritt (a) eingesetzten wässrigen Lösungen herzustellen, sind die Angaben zur Chromsäure stets auf das Anhydrid (CrO₃)ₓ oder kurz CrO₃ bezogen.

Chromsäure, Schwefelsäure und Wasser (bzw. deren Dissoziations- und Kondensationsprodukte) sind üblicherweise die im Wesentlichen einzigen Bestandteile der in Schritt (a) eingesetzten Lösung. Die Lösungen, die sich zum Färben solcher Edelstähle eignen, enthalten üblicherweise ca. 50 - 600 Gramm pro Liter Chromsäure (berechnet als CrO₃) und ca. 400 - 1200 Gramm pro Liter Schwefelsäure (berechnet als H₂SO₄), wobei der Rest Wasser ist. Das Verhältnis der Säurekonzentrationen wird dabei im Wesentlichen durch die Löslichkeit der Chromsäure in der Lösung bestimmt.

Neben diesen Bestandteilen kann die wässrige Lösung jedoch auch noch weitere Zusätze, etwa Mangansulfat, oder Verschleppungen aus einem etwaigen vorangehenden chemischen oder elektrochemischen Bearbeitungs-, Behandlungs- oder Reinigungsverfahren enthalten. Diese weiteren Substanzen umfassen jedoch regelmäßig insgesamt weniger als 5% der Lösung. Eine wässrige Lösung kann vorzugsweise mindestens 50 g/L, insbesondere mindestens 150 g/L CrO₃, und vorzugsweise höchstens 600 g/L, insbesondere höchstens 300 g/L CrO₃ enthalten. Außerdem kann die Lösung vorzugsweise mindestens 400 g/L, insbesondere mindestens 450 g/L H₂SO₄, und vorzugsweise höchstens 1200 g/L, insbesondere höchstens 1100 g/L H₂SO₄, beispielsweise höchstens 700 g/L H₂SO₄ enthalten.

Schritt (a) des erfindungsgemäßen Verfahrens wird in der Regel bei erhöhten Temperaturen durchgeführt, die üblicherweise im Bereich von 60 bis 110°C, vorzugsweise bei 80 bis 100°C liegen.

Die Dauer dieses ersten Schrittes hängt von der Konzentration der Lösung und der Temperatur, der Art und Struktur der Edelstahloberfläche, vor allem jedoch von der zu erzielenden Färbung der Edelstahloberfläche ab und wird im Allgemeinen 5 Minuten nicht unterschreiten und 15-20 Minuten nicht erheblich überschreiten. Das Ende der Behandlungsdauer lässt sich zuverlässig beispielsweise nach dem Verfahren der DE 2 230 157 durch Messung der elektrischen Potentialdifferenz zu einer Referenzelektrode bestimmen.

Im Anschluss an die Behandlung der Edelstahloberfläche mit einer wässrigen Chrom- und Schwefelsäurelösung wird diese Lösung von der gefärbten Edelstahloberfläche üblicherweise zunächst entfernt. Dieses Entfernen kann insbesondere durch ein Spülen der Edelstahloberfläche mit einer Flüssigkeit, beispielsweise mit Wasser, erfolgen. Daran kann sich ein Entfernen der Spüllösung, etwa durch Trocknen anschließen, wobei dieses Trocknen sowohl bei Zimmertemperatur erfolgen kann als auch bei höherer Temperatur. Ein Trocknen bei Temperaturen oberhalb von Zimmertemperatur, etwa bei Temperaturen von 150°C bis 220°C erfolgt rascher. Auf die Qualität der schließlich erhaltenen farbigen Oberflächen hat die verwendete Trockentemperatur jedoch keinen deutlich messbaren Einfluss (zumindest im untersuchten Bereich zwischen Zimmertemperatur und 220°C). Während des Trocknens bei höheren Temperaturen verliert der Überzug aus hydratisierten Metalloxiden einen Teil des Wassers. Dies erhöht die Porosität der farbgebenden Schichten und verleiht ihnen eine bessere Farbstabilität, insbesondere auch gegenüber erhöhten Temperaturen.

Im Anschluss daran wird ein Sol-Gel-Lack auf die gefärbte Edelstahloberfläche aufgebracht. Es versteht sich für den Fachmann, dass dieser Lack zunächst in Form eines flüssigen Sols mit darin schwebenden kolloidalen Partikeln aufgebracht wird, das sich anschließend in ein Gel umwandelt und schließlich eine feste, harte Lackschicht bildet. Wenn also vom "Auftragen des Sol-Gel-Lacks" bzw. dem "Härten des Sol-Gel-Lacks" die Rede ist, weiß der Fachmann, in welchem Zustand sich das Sol-Gel-System dabei befindet.

Vorzugsweise handelt es sich bei dem Sol um ein Kieselsol, basierend auf Silanen, die in Lösemittel, etwa Alkohol, gelöst werden. Wahlweise könne diese Kieselsole auch ein oder mehrere weitere Sol-bildende Elemente wie etwa Al, Ti, Zr, Mg, Ca oder Zn aufweisen, die Si-Atome in den kolloidalen Strukturen ersetzen.

Die Ausgangsverbindungen zur Bildung der Sole und schließlich des Sol-Gel-Lacks sind hydrolysierbare Silane der Formel SiR₄, wobei die 4 Reste R 2-4 hydrolysierbare Reste OR' und 0-2 nicht-hydrolysierbare Reste R" umfassen. Diese Ausgangs-Silane können also auch als Si(OR')₄₋ₙR"ₙ mit n = 0,1 oder 2 dargestellt werden. Wenn zusätzliche Sol-bildende Elemente, wie sie eben beschrieben wurden, eingesetzt werden, sind entsprechende Verbindungen gemäß den Wertigkeiten der Elemente als Ausgangsverbindungen zu wählen, etwa AlR₃, usw.

Die hydrolysierbaren Reste OR' sind Hydroxy-, Alkoxy- und/oder Cycloalkoxyreste. Geeignete Beispiele hierfür umfassen etwa Hydroxy-, Methoxy-, Ethoxy-, n-Propoxy-, Isopropoxy-, n-Butoxy-, i-Butoxy-, t-Butoxy-, Pentoxy-, Hexoxy-, Cyclopentyloxy-, Cyclohexyloxyreste, wobei insbesondere Ethoxy-, n-Propoxy- und Isopropoxyreste bevorzugt werden. Die hydrolysierbaren Reste OR' können gleich oder verschieden voneinander sein.

Die nicht-hydrolysierbaren Reste R", so sie vorhanden sind, sind Alkyl- und/oder Cycloalkylreste. Geeignete Beispiele hierfür umfassen etwa Methyl-, Ethyl-, n-Propyl-, Isopropyl-, n-Butyl-, i-Butyl-, t-Butyl-, Pentyl-, Hexyl-, Cyclopentyl-, Cyclohexylreste, wobei insbesondere Methyl-, Ethyl-, n-Propyl- und Isopropylreste bevorzugt werden. Die nicht-hydrolysierbaren Reste R" können ebenfalls gleich oder verschieden voneinander sein.

Die Ausgangsverbindungen der Sole können aus einer einzigen Art von Silan bestehen, häufig werden sie aber Gemische aus mehreren Silanen (und gegebenenfalls zusätzlichen Sol-bildenden Ausgangsverbindungen anderer Elemente) umfassen. Bevorzugt ist, dass zumindest eine der Komponenten der Ausgangsverbindungen ein Silan der Formel Si(OR')₄₋ₙR"ₙ mit n = 0 ist, also Si(OR')₄. Beispielsweise kann ein bevorzugter Sol-Gel-Lack die Ausgangsmaterialien TEOS (Tetraethoxyorthosilan) und MTES (Methyltriethoxysilan) und/oder DMDES (Dimethyldiethoxysilan) umfassen.

Daneben können natürlich auch andere, auf dem Gebiet der Sol-Gel-Systeme übliche Zusatzstoffe eingesetzt werden, beispielsweise zusätzliche Netzwerkbildner, wie etwa Acryloxypropyltrimethoxysilan bzw. Methacryloxypropyltrimethoxysilan, die für weitere organische Vernetzungen sorgen können, insbesondere wenn ein nicht unerheblicher Teil der Ausgangsverbindungen sogenannte netzwerkwandelnde Verbindungen der Formel Si(OR')₄₋ₙP"ₙ mit n = 1 oder 2 sind.

Im Sol sind die Ausgangsverbindungen zum Teil zu den entsprechenden Hydroxyverbindungen (etwa Orthokieselsäure, Trihydroxyalkylsilan, usw.) hydrolysiert, was durch die Zugabe eines Katalysators, etwa von Säure, begünstigt werden kann. Aufgrund der hohen Neigung zur Kondensation dieser Hydroxyverbindungen können diese nun unter Abspaltung von Wasser zu kleineren Siloxannetzwerken kondensieren. In dem Sol liegen bereits kolloidale Partikel vor, die Siloxan-Bindungen enthalten. Siloxan-Bindungen sind Bindungen der Form ≡Si-O-Si≡, wobei "≡" drei voneinander unabhängige beliebige Bindungen mit anderen Elementen, insbesondere mit OH, OR' und R", symbolisiert, wodurch eine dreidimensionale vernetzte Struktur in den kolloidalen Partikeln entsteht. Dabei haben OR' und R" dieselbe Bedeutung wie oben.

Das Auftragen des Sol-Gel-Lacks kann dabei auf jede beliebige Art und Weise erfolgen, etwa durch Eintauchen, Fluten, Aufsprühen oder Aufstreichen. Vorzugsweise erfolgt er jedoch durch Aufsprühen, da dies eine genaue Kontrolle der pro Flächeneinheit aufgebrachten Menge ermöglicht.

Dabei kann die Menge nach Bedarf eingestellt werden; beispielsweise so, dass sie gerade ausreicht, um die bei der in Schritt (a) entstandenen Poren auszufüllen, so dass sich keine zusammenhängende Schicht oberhalb des Oxidüberzugs ausbildet und die Struktur der äußersten Oberfläche zumindest teilweise erhalten bleibt, bzw. nicht wesentlich verändert wird. In einer anderen Ausführungsform der Erfindung kann die Menge aber auch so eingestellt werden, dass über dem Metalloxidüberzug noch eine allein aus dem Sol-Gel-Lack bestehende Schicht einer bestimmten Dicke ausgebildet wird. Die gesamte Oberfläche aus dem farbgebenden Oxidüberzug (bzw. der durch Eindringen des Sols in dessen Poren entstehenden Verbundschicht) und gegebenenfalls der über diesem Oxidüberzug allein aus dem Sol-Gel-Lack bestehenden Deckschicht weist vorzugsweise eine Schichtdicke von bis zu etwa 6 µm auf, weiter bevorzugt etwa 0,5 bis 3 µm.

Die Schichtdicke dieser gesamten Oberfläche aus farbgebendem Oxidüberzug und Sol-Gel-Lack kann je nach gewünschter Farbe mindestens 0,2 µm, vorzugsweise mindestens 0,5 µm betragen. In bevorzugten Ausführungsformen kann die Schichtdicke bis zu etwa 6,0 µm, vorzugsweise bis zu 3,0 µm betragen.

Als vorteilhaft hat sich erwiesen, dass das Feststoffvolumen an Sol-Gel-Lack, das nach dem Auftragen und der Gelbildungsreaktion des Sol-Gel-Lacks sowie der thermischen Härtung auf der Edelstahloberfläche bleibt, mindestens ein Volumen aufweist, das ca. 30% des Volumens des Oxidüberzugs entspricht. Wenn dieser Wert unterschritten wird, ist die erhaltene Schicht weniger widerstandsfähig. Dies könnte darauf beruhen, dass die Poren des Oxidüberzugs dann nur partiell gefüllt sind.

In einer bevorzugten Ausführungsform weist das den Sol-Gel-Lack bildende Sol beim Auftragen eine Viskosität auf, die es ermöglicht, dass das Sol in die Poren des Oxidüberzugs eindringen kann. Es hat sich gezeigt, dass das Sol bei entsprechend hoher Verdünnung in seinem Lösemittel ausreichend dünnflüssig ist, um in die poröse Oxidschicht der gefärbten Edelstahloberfläche einzudringen und die Poren in diesem Oxidüberzug zu füllen. Es ist daher beim Auftragen des Sols darauf zu achten, dass das Sol eine ausreichend geringe Viskosität aufweist, so dass die Poren in ausreichendem Maß mit dem Sol gefüllt werden.

Geeignete Lösemittel für das Sol sind Wasser und vor allem Alkohole wie Methanol, Ethanol, n-Propanol oder Isopropanol, wobei Ethanol und Isopropanol aufgrund ihrer physikalischen Eigenschaften und der geringen Toxizität ihrer Dämpfe bevorzugt werden.

Daraufhin lässt man das aufgetragene Sol zu einem Gel reagieren. Diese Reaktion überführt das flüssige Sol in eine feste Gelschicht, in der sich die kolloidalen Partikel des Sols durch weitere Hydrolyse und Kondensation miteinander und mit noch nicht hydrolysierten und kondensierten Ausgangsverbindungen vernetzen. Dies kann beispielsweise durch Verdunsten des alkoholischen Lösemittels beim Trocknen geschehen.

Die mit dem Gel beschichteten Edelstahloberflächen und das vorzugsweise in den Poren der Oxidschicht befindliche Gel werden schließlich in Schritt (c) des erfindungsgemäßen Verfahrens einer thermischen Härtung unterzogen. Dies geschieht bei erhöhten Temperaturen, wobei sich das Gel in eine farblose, transparente, glasartige Schicht umwandelt. Die Kieselsol-Bestandteile wandeln sich dabei in ein noch stärker vernetztes Siliziumdioxid um, das je nach Zusammensetzung des zugrundeliegenden Sols weitere Bestandteile wie etwa Aluminiumoxid, Titanoxid oder Zirkoniumoxid enthalten kann. Diese Schichten sind hart, geschlossen und beständig gegen viele der Chemikalien, mit denen eine Oberfläche unter gewöhnlichen Umständen in Berührung kommen kann, sowie gegen Temperaturen bis etwa 500°C.

Gemäß einer bevorzugten Ausführungsform wird die beschichtete Oberfläche bei der anschließenden Härtung des Gels Temperaturen von 160 °C bis 220°C ausgesetzt. Diese Härtung sollte für eine Dauer von mindestens 10 Minuten, vorzugsweise 20 bis 45 Minuten, beispielsweise 30 Minuten lang erfolgen. Die Härtung wird vorzugsweise bei Temperaturen zwischen 180°C und 210°C, beispielsweise bei 200°C, durchgeführt, aber auch Temperaturen unterhalb von 180°C eignen sich hierfür. Dabei wandelt sich das Gel in einen harten, farblosen und transparenten, glasartigen Lack um, der die gefärbte Edelstahloberfläche dicht versiegelt, seinerseits keine Risse aufweist und der Edelstahloberfläche eine deutlich höhere Härte und Verschleißbeständigkeit verleiht, als dies bisher bei farbigen Edelstahloberflächen erzielt werden konnte.

Die Prozesse der Gelbildung und der Härtung des Gels können dabei ineinander übergehen, da etwa eine Gelbildung durch Trocknen und Verdunsten des Lösemittels zumindest teilweise auch noch zu Beginn der Behandlung zur Härtung erfolgen kann. Auch ein solches Verfahren, bei dem die Prozesse der Gelbildung und der Härtung des Gels ineinander übergehen, ist von der Erfindung umfasst.

Wurde die Menge an aufgetragenem Sol-Gel-Lack gemäß einer Ausführungsform so eingestellt, dass sie lediglich bestehende Poren ausfüllt, entsteht keine zusammenhängende glasartige Schicht oberhalb des Oxidüberzugs; die gefärbte Edelstahloberfläche ist jedoch trotzdem merklich härter und widerstandsfähiger als herkömmlich gehärtete gefärbte Edelstahloberflächen und weist viele der Vorzüge auf, die vollständig mit den gehärteten Gel beschichtete gefärbte Edelstahloberflächen aufweisen.

Die Temperaturbeständigkeit der so erzielten Oberflächen (mit oder ohne zusammenhängender Sol-Gel-Lackschicht) liegt deutlich über der Temperaturbeständigkeit, die herkömmlich behandelte farbige Edelstahloberflächen aufweisen. Dies ist darauf zurückzuführen, dass die Sol-Gel-Beschichtung gegenüber Temperaturen bis 500°C beständig ist und die Metalloberfläche gegenüber der Atmosphäre weitgehend dicht abschließt.

In speziellen Ausführungsformen der vorliegenden Erfindung kann das Verfahren jedoch auch herkömmliche Härtungsverfahren, insbesondere eine kathodische Härtung im Anschluss an die Behandlung mit wässriger Lösung von Schwefelsäure und Chromsäure umfassen. Dabei kann das hier vorgestellte erfindungsgemäße Verfahren und insbesondere die Schritte (b) und (c) wie oben beschrieben zum Verbessern von Eigenschaften der farbigen Edelstahloberfläche dienen, insbesondere dem Glätten der auf herkömmliche Weise gehärteten gefärbten Edelstahloberfläche, der Erhöhung der Abriebfestigkeit, der Verbesserung des Reinigungsverhaltens und der Erhöhung der Temperaturbeständigkeit. Dabei versteht es sich, dass ein solches Verfahren, das nach Schritt (a) zusätzlich einen Schritt zur kathodischen Härtung aufweist, außerdem einen sich daran unmittelbar anschließenden Schritt zur Entfernung des Elektrolyten der kathodischen Härtung umfassen kann.

Die kathodische Härtung kann dabei beispielsweise gemäß der Patentanmeldung DE 21 26 129 erfolgen, etwa durch Eintauchen in eine wässrigen Elektrolytlösung, die 100 - 500 g/L CrO₃ und 1 - 10 g/L H₂SO₄ oder H₃PO₄, vorzugsweise 200 - 300 g/L CrO₃ und ca. 5 g/L H₂SO₄ oder H₃PO₄, enthält. Das gefärbte Werkstück wird als Kathode in einem Gleichstromkreis geschaltet, wobei die angelegte Spannung unterhalb des Wertes für eine Abscheidung von metallischem Chrom liegt. Die Härtung erfolgt in der Regel bei einer Temperatur zwischen 20 und 80°C und bei einer Stromdichte von 0,6 - 30 A/dm². Das Entfernen des Elektrolyten kann insbesondere durch ein Spülen der Edelstahloberfläche mit einer Flüssigkeit, beispielsweise mit Wasser, erfolgen und ein Trocknen umfassen, das sowohl bei Zimmertemperatur erfolgen kann als auch bei höherer Temperatur, etwa bei Temperaturen von 150°C bis 220°C.

Bei Farben, die höheren Schichtdicken entsprechen, wie beispielsweise blau, gold, rot und grün, führt ein kathodisches Härten nach dem Färben gemäß dem bisherigen Stand der Technik allerdings zu einer Veränderung der Farbe hin zu höheren Schichtdicken. Dies beruht darauf, dass die Schichten durch das Auffüllen der Poren mit weiterem Chrom optisch dichter werden. Da diese Farbveränderung selbst ebenso wie auch ihr Umfang dem Fachmann bekannt sind, wird dies beim Färben durch die Ausbildung entsprechend geringerer Schichtdicken und eine entsprechend kürzere Behandlungsdauer berücksichtigt.

Es zeigt sich überraschenderweise, dass das erfindungsgemäße Verfahren eine deutlich geringe Farbveränderung bewirkt und Glanz und Aussehen der Farbe erhalten bleiben. Wie bei der kathodischen Härtung werden auch mit dem erfindungsgemäßen Verfahren die nach der Behandlung mit wässriger Lösung von Chrom- und Schwefelsäure entstandenen Poren aufgefüllt. Dieses Auffüllen erfolgt jedoch im Gegensatz zu herkömmlichen Verfahren nicht durch weiches, aber optisch dichteres Chrom/Chromoxid, sondern durch Sol, das sich durch Gelbildung und anschließende Härtung in eine harte glasartige, transparente Lackschicht umwandelt, wodurch die Farbschicht ihre hohe Härte erhält ohne ihre Farbe in gleichem Umfang zu verändern. Die gegebenenfalls darüber hinaus auf der Oberfläche der Oxidschicht gebildete harte glasartige Schicht ist ebenfalls farblos und transparent, sie trägt nicht zu einer Farbveränderung bei. Es ist daher ein weiterer Vorteil der vorliegenden Erfindung, dass sie ein Färben durch Behandlung mit Chrom- und Schwefelsäurelösung gemäß Schritt (a) bis zum gewünschten Farbton erlaubt, ohne dass eine den Farbton deutlich verändernde anschließende kathodische Härtung in gleichem Ausmaß berücksichtigt werden muss. Dies ist insbesondere bei kritischen Farben, die nahe am Umschlag zum nächsten Farbton liegen von Vorteil, da sich die Farbe der Edelstahloberfläche wie auch ihr Glanz bei erfindungsgemäßer Behandlung nur geringfügig verändert.

Ein wesentlicher Vorteil der vorliegenden Erfindung besteht auch darin, dass durch die Möglichkeit, dass der Sol-Gel-Lack auch teilweise in die Poren des farbigen Oxidüberzugs eindringen und mit diesem eine Verbundschicht bilden kann, dieser Sol-Gel-Lack auf der Edelstahloberfläche deutlich besser haftet. Dadurch wird die Schichthaftung, die bei Beschichtungen von Stählen mit Sol-Gel-Lacken ein erhebliches Problem darstellen kann, deutlich verbessert und die Wahrscheinlichkeit einer Schichtablösung, etwa das Abplatzen der Lackschicht, erheblich verringert bzw. nahezu vollständig verhindert. Ein weiterer Aspekt der vorliegenden Erfindung betrifft daher die Verwendung eines Sol-Gel-Lacks zum Härten und/oder Glätten einer Edelstahloberfläche, die durch Behandlung mit einer Schwefelsäure und Chromsäure enthaltenden Lösung einen porösen Oxidüberzug erhält, in den der Sol-Gel-Lack eindringt und mit dem Oxidüberzug eine feste Verbundschicht bildet, wodurch die Lackschicht eine deutlich verbesserte Schichthaftung erhält.

Bei farbigen Edelstahloberflächen, die vor dem Auftragen des Sol-Gel-Lacks bereits kathodisch gehärtet wurden, kann die Füllung der Poren durch die kathodische Abscheidung bewirken, dass der Sol-Gel-Lack nicht mehr in nennenswertem Umfang in die Poren eindringen kann, so dass dieser eben beschriebene Vorteil nicht mehr oder nur noch in verringertem Umfang auftritt. So zeigen etwa gemäß dem Stand der Technik kathodisch gehärtete Edelstahloberflächen, die anschließend gemäß den Schritten (b) und (c) des erfindungsgemäßen Verfahrens mit einem Sol-Gel-Lack beschichtet und gehärtet wurden, eine um etwa 30% geringere Ritzhärte (gemessen wie in Beispiel 3 beschrieben).

Die erfindungsgemäßen farbigen Edelstahloberflächen weisen somit ähnlich den nach herkömmlichen Verfahren hergestellten Oberflächen attraktive, metallisch glänzende Farben auf. Sie sind jedoch im Gegensatz zu diesen deutlich glatter und angenehm anzufassen und unempfindlich gegenüber Fingerabdrücken. Weiterhin sind die Oberflächen der so behandelten Gegenstände wasser- und schmutzabweisend und sehr leicht zu reinigen. Aufgrund ihrer deutlich höheren Härte (Ritzhärte) weisen die nach dem erfindungsgemäßen Verfahren hergestellten, gefärbten Edelstahloberflächen auch eine deutlich höhere Abriebbeständigkeit auf als herkömmliche gefärbte Edelstahloberflächen. Daher sind sie für einen wesentlich weiteren Anwendungsbereich geeignet. Mögliche Anwendungen sind etwa Gegenstände mit farbigen Edelstahloberflächen im Bereich von Möbeln, Kücheneinrichtungen und -utensilien, Automobilzierteilen, Liftverkleidungen, Gebrauchsartikeln, Schmuck, Geschirr und vieles mehr. Derartige Gegenstände sind ebenfalls ein Aspekt der vorliegenden Erfindung.

Die Erfindung wird in den nachfolgenden Beispielen näher erläutert. Diese Beispiele stellen dabei nur mögliche Ausführungsformen des hier beschriebenen Verfahrens zum Färben von Edelstahloberflächen dar und sollen in keiner Weise eine Beschränkung auf die hier verwendeten Bedingungen implizieren.

### Beispiele

### Beispiel 1

Ein Edelstahlblech aus dem Werkstoff 1.4301 mit kalt gewalzter und gebeizter Oberfläche wurde in einer Chrom- und Schwefelsäure-haltigen Lösung blau eingefärbt, mit Wasser gespült, an Luft bei Zimmertemperatur getrocknet und mit Sol beschichtet, so dass das Sol eine Schichtdicke von ca. 1 µm aufwies. Nach dem Trocknen und der Umwandlung des Sols zum Gel wurde die Oberfläche für 30 min bei 200 °C gehärtet.

Das Ergebnis war eine metallisch glänzende, glatte blaue Oberfläche. Die Ritzhärte der Beschichtung wurde nach dem Wolff-Wilborn-Verfahren ermittelt. Dabei wurde eine Härte gemessen, die jenseits der Bleistifthärte H7 als härtester verfügbarer Härte lag. Wasser perlte von der Oberfläche rückstandsfrei ab. Dasselbe wurde nach einem Benetzen mit Geschirrspülmittel und Nachspülen mit Wasser beobachtet. Fingerabdrücke führten zu keinerlei Farbveränderung.

### Beispiel 2

Ein Edelstahlblech aus dem Werkstoff 1.4404 mit matt gebeizter Oberfläche wurde auf die Farbe Rotgold gefärbt, mit Wasser gespült und anschließend für 20 Minuten bei 200°C getrocknet. Nach dem Trocknen war die Oberfläche Hellgold. Das Sol wurde in einer Schichtdicke von ca. 1 µm aufgebracht. Durch Verdampfen des Lösemittels wurde die Gelbildung initiiert und die Oberfläche anschließend 30 min lang bei 200 °C behandelt.

Die Oberfläche zeigte danach eine Purpurfarbe und ist im Vergleich weniger verändert als nach einem kathodischen Härtung. Die Oberfläche war im Gegensatz zur kathodisch gehärteten Oberfläche im Mikrobereich glatt und geschlossen. Sie war unempfindlich gegen Fingerabdrücke, wasserabweisend und gemäß dem Wolff-Wilborn-Verfahren härter als Bleistifthärte H7.

### Beispiel 3

Edelstahlbleche der Qualität 1.4301 mit elektropolierter Oberfläche, die in der Farbe Gold gefärbt wurden, wurden
a) nicht weiter behandelt,
b) kathodisch gehärtet, oder
c) erfindungsgemäß mit einem Sol-Gel-Lack behandelt und gehärtet, wobei der gehärtete Sol-Gel-Lack mindestens 30 % (v/v) des Volumens des Oxidüberzugs umfasst.

Die so erhaltenen Oberflächen wurden an einem Ritzhärteprüfgerät vom Typ "Elcometer 3000 Motorised Clemen" untersucht. Dabei wird ein Stahlstift mit abgerundeter Spitze unter Belastung einmal über die Oberfläche gezogen. Die Ritzspur wurde anschließend unter dem Mikroskop daraufhin untersucht, ob in der Spur die Oberfläche nur Beschichtungsmaterial zu sehen ist oder blankes Metall. Als Ergebnis wurde die Ritzhärte definiert, bei der in der Ritzspur überall noch eine Deckschicht vorhanden war und bei der eine weitere Steigerung der Belastung dazu führte, dass die Ritzspur zumindest stellenweise blanke Metalloberfläche zeigte.

Die Parameter der Prüfung waren:
- Radius der Spitze: 0,5 mm
- Belastungen: 50 g, 100 g, dann schrittweise jeweils 100 g mehr

Ergebnis:
- Oberfläche (a): Ritzhärte unter 50 g
- Oberfläche (b): Ritzhärte 200 g
- Oberfläche (c): Ritzhärte 1000 g

### Beispiel 4

### Benetzbarkeit

Auf Oberflächen der Farben Rot (kathodisch gehärtet) und Gold (Sol-Gel-Beschichtung 30%) wurde destilliertes Wasser aufgetropft und der Kontaktwinkel zur Oberfläche gemessen. Je niedriger der Kontaktwinkel ist, desto besser wird die Oberfläche durch das Wasser benetzt. Kontaktwinkel über 90° kennzeichnen hydrophobe Oberflächen. Die Messung des Kontaktwinkels erfolgt in der Weise, dass die Tropfen parallel zur horizontalen Metalloberfläche mit 20-facher Vergrößerung abgebildet wurden und durch Anlegen einer Tangente an die Tropfenoberfläche am Kontaktpunkt der Kontaktwinkel mit einer Genauigkeit von +/- 5° bestimmt wurde. Die Benetzbarkeit von Oberflächen ist auch ein Hinweis auf die Reinigungsfähigkeit, die umso besser ist, je geringer die Benetzbarkeit ist.

### Ergebnisse:

Der Kontaktwinkel auf der kathodisch gehärteten Oberfläche betrug 20°, d.h. die Oberfläche ist durch Wasser gut benetzbar. Der Kontaktwinkel auf der erfindungsgemäßen Oberfläche betrug 100°, d.h. Wasser benetzt die Oberfläche nicht, sondern perlt von ihr rückstandsfrei ab.

Wassertropfen konnten von der erfindungsgemäßen Oberfläche durch eine Pipette rückstandsfrei von der Oberfläche aufgenommen werden. Bei dem Versuch, Wassertropfen von der kathodisch gehärteten Oberfläche aufzunehmen, blieb ein Wasserfilm (nasser Fleck) zurück, der auf der Oberfläche haftete.

## Patentansprüche

1. Farbige Edelstahloberfläche, die einen dünnen porösen Oxidüberzug, der durch Behandlung der Edelstahloberfläche mit einer im Wesentlichen Schwefelsäure und Chromsäure enthaltenden Lösung erhalten wurde, und eine Sol-Gel-Lackschicht, die thermisch gehärtet wurde, umfasst.

2. Farbige Edelstahloberfläche nach Anspruch 1, wobei sich die Sol-Gel-Lackschicht zumindest teilweise in den Poren des Oxidüberzugs befindet.

3. Farbige Edelstahloberfläche nach Anspruch 1 oder 2, wobei die Sol-Gel-Lackschicht mit dem Oxidüberzug eine feste Verbundschicht bildet.

4. Farbige Edelstahloberfläche nach einem der vorstehenden Ansprüche, wobei der poröse Oxidüberzug einen Porenanteil von 15-35 % (v/v) aufweist.

5. Farbige Edelstahloberfläche nach einem der vorstehenden Ansprüche, wobei der poröse Oxidüberzug eine Schichtdicke von weniger als 1 µm aufweist.

6. Farbige Edelstahloberfläche nach einem der vorstehenden Ansprüche, wobei der Sol hydrolysierbare Silane enthält, welche über Siloxanbindungen einen festen Lack ausbilden können.

7. Farbige Edelstahloberfläche nach einem der vorstehenden Ansprüche, wobei die Oberfläche aus porösem Oxidüberzug und Sol-Gel-Lackschicht eine Schichtdicke von bis zu 6 µm, vorzugsweise 0,5 bis 3 µm aufweist.

8. Gegenstand mit mindestens einer farbigen Edelstahloberfläche nach einem der vorstehenden Ansprüche.

9. Verfahren zur Herstellung einer farbigen Edelstahloberfläche nach einem der Ansprüche 1-7, umfassend:
a) Behandeln der Edelstahloberfläche mit einer Lösung, welche Schwefelsäure und Chromsäure enthält, um die Edelstahloberfläche durch Erzeugung eines dünnen porösen Oxidüberzugs zu färben,
b) Auftragen eines Sol-Gel-Lacks auf die gefärbte Edelstahloberfläche und
c) thermisches Härten des den Lack bildenden Gels.

10. Verfahren nach Anspruch 9, **dadurch gekennzeichnet, dass** das die Sol-Gel-Lackschicht bildende Sol eine Viskosität aufweist, dass es in die Poren des Oxidüberzugs einziehen kann.

11. Verfahren nach Anspruch 9 oder 10, **dadurch gekennzeichnet, dass** das Gel für eine Dauer von mindestens 10 Minuten bei Temperaturen von 160 °C bis 220 °C gehärtet wird.

12. Verfahren nach einem der Ansprüche 9 bis 11, **dadurch gekennzeichnet, dass** die farbige Edelstahloberfläche vor dem Aufbringen der Sol-Gel-Lackschicht einer kathodischen Härtung unterzogen wurde.

13. Verwendung eines Sol-Gel-Lacks zum Härten und/oder Glätten einer Edelstahloberfläche, **dadurch gekennzeichnet, dass** die Edelstahloberfläche durch Behandlung mit einer Schwefelsäure und Chromsäure enthaltenden Lösung einen porösen Oxidüberzug erhält, in den der Sol-Gel-Lack eindringen kann und mit diesem porösen Oxidüberzug eine feste Verbundschicht bilden kann.
